# EUROPEAN PATENT APPLICATION

(11) **EP 2 040 193 A2**
(43) Date of publication of application: **25.03.2009**
(21) Application number: 08015485.9
(22) Date of filing: 02.09.2008
(51) Int. Cl.: G06K 1/12

(54) **Barcode generation system, computer readable recording medium, printing device, and test chart**

(30) Priority: 19.09.2007 JP 2007241989
(71) Applicant: Canon Finetech Inc., Misato-shi Saitama 341-8527 (JP)
(72) Inventor: Ota, Noritaka, Misato-shi Saitama 341-8527 (JP)
(74) Representative: Strehl Schübel-Hopf & Partner

(57) **Abstract**

A test chart for printing black bars and white bars of a barcode, each of which has one of multiple different numbers of dots-in-width, is printed on a printing device on which barcodes are printed. In image data on the test chart, the space between neighboring black bars on the test chart is used as a white bar. The widths of black bars and white bars of a barcode are measured based on the image of the printed test chart. Based on this measurement result, the numbers of dots-in-width of black bars and white bars to be set at a printing time are calculated as barcode correction values so that the black bar widths and white bar widths of a printed barcode meet predetermined sizes. This configuration generates barcode configuration information, or barcodes, that satisfy individual user's use condition, quickly and with the minimal use of paper and ink.

## Description

### DETAILED DESCRIPTION

### Field of the Invention

The present invention relates to a printing device that records an image using a recording head and to a barcode generation system that generates data used to print barcodes on the printing device.

### Description of the Related Art

In general, a barcode generation system that uses an inkjet recording head has an advantage that an image can be formed on various types of media in a non-contact manner but has a tendency that, because an ink droplet blurs on paper, the black bar of a barcode becomes wider and the neighboring white bars (that is, white spaces) become narrower. Because the black bar and the white bar of a barcode should have the same width, this bar widening/narrowing greatly affects the barcode reading accuracy sometimes with a problem that the barcode cannot be read.

To solve this problem, there are provided a barcode correction method that makes the white bar of a barcode wider in advance anticipating that the dot will blur and a method that suppress the blurring of a black bar part (see Patent Document 1).

Another problem is that, because the degree of the ink blur depends largely on the material of the paper, a barcode cannot be read depending upon the type of paper (paper type).

To solve this problem, a technique is proposed that covers the difference among paper types by preparing in advance the tables, one for each paper type, containing the number of dots in width of both a black bar and a white bar (see Patent Document 2).

A still another problem is that, because the degree of the ink blur depends not only on the paper materials but also on various factors such as ink types, individual recording-head characteristics, and ambient environments, a barcode cannot sometimes be read because of differences in those use conditions.

To solve this problem, a technique is proposed that generates a barcode best suited to each usage environment by creating and actually printing a lot of barcodes with different correction values and reading the printed barcodes with a barcode verifier (see Patent Document 3).
[Patent Document 1] Japanese Patent Laid-Open Publication No. 2003-237059
[Patent Document 2] Japanese Patent Laid-Open Publication No. Hei 08-123886
[Patent Document 3] Japanese Patent Laid-Open Publication No. Hei 08-044807

However, the conventional technologies have the following problems.

The problem with the barcode generation system disclosed in Patent Document 1 is that the method, though effective when the degree of the dot blur is known in advance, does not work well when the paper type is changed.

The problem with the barcode generation system disclosed in Patent Document 2 is that a software barcode correction table must be added and modified each time a new paper type is added.

The barcode generation system disclosed in Patent Document 3 uses a method in which a large number of barcodes are generated and printed with the correction values finely adjusted for the conditions of barcodes that are actually used (that is, barcode types such as EAN128 and CODE39, parameters specifying the number of digits of a numeric value to be converted to a barcode or the size of the barcode and, after that, the printed barcodes are read with a verifier for comparing the read results. The problem with this barcode generation system is that the determination of the best barcode conditions involves a waste of a large amount of paper and time for printing. This technique also has problem in maintaining verification patterns, because the addition of paper, which has conditions and the degree of the blur significantly different from those of the conventional one, requires the addition of verification barcodes with a wider correction range.

A still another problem with a printing device using the inkjet recording method is that, though an attempt is made to configure barcodes of the same dot width, the bar width becomes different between a bar configured in parallel to the paper conveyance direction and a bar configured vertically to the paper conveyance direction because of satellites (sub-droplets) separated from the main droplet of ejected ink. This problem is most noticeable when printing is performed in one pass.

In order to address the conventional problems described above, the assignee of this application has already proposed a barcode generation system and a test chart in Japanese Patent Application 2007-151371 and Japanese Patent Application 2007-183745. In this barcode generation system, a test chart is printed for calculating the correction values of the bars and spaces of a barcode in an actual print environment and, based on the print result, the barcode correction values are determined. This system has solved the problems described above. However, this system requires a user to print two test charts for bars and spaces, respectively, and, after that, to read each of the test charts for analysis, leaving room for improvement in the manual operation and the ink consumption amount.

### SUMMARY OF THE INVENTION

In view of the foregoing, it is an object of the present invention to provide a barcode generation system, a computer readable recording medium, a printing device, and a test chart that can generate barcode configuration information and, hence, barcodes that satisfy individual user's use condition, quickly and with a minimum usage amount of paper and ink.

A barcode generation system according to the present invention is a barcode generation system that generates barcode configuration information for printing barcodes, comprising a storage means that stores image data of a test chart for printing black bars and white bars of a barcode, each bar in one of plurality of different numbers of dots in width; a measurement means that measures widths of black bars and white bars of the barcode based on an image of the test chart printed by a particular printing device based on the image data on the test chart; and a bar width correction means that calculates numbers of dots-in-width of black bars and white bars to be set at a printing time, based on a measurement result of the measurement means, as barcode correction values so that widths of printed black bars and white bars meet predetermined sizes, wherein in the image data on the test chart, a space between neighboring black bars on the test chart is used as the white bar.

The measurement means outputs the measured values of actual widths of bar elements (black bars and white bars), printed in varying numbers of dots in width (specified values), from the test chart printed under a condition where a particular type of printing device and a particular type of paper are used and, based on the values, produces the relation between the number of dots in width and the actual widths under the condition. The relation produced in this way allows the bar width correction means to calculate the numbers of dots-in-width of black bars and white bars to be set at a printing time as barcode correction values so that the black bar widths and the white bar widths of a printed barcode meet predetermined sizes. With the barcode correction values in the condition, barcodes can be printed in appropriate element widths even if there are width variation factors, such as a blur, in the barcode element widths. In addition, because the space between neighboring black bars on the test chart is used as the white bar in the image data on the test chart, this barcode generation system eliminates the need for preparing separate test patterns, one for black bars and another for white bars, reduces the test pattern size, and reduces the size of the test chart on which this test pattern is printed. This barcode generation system also saves paper and ink required for recording the test chart.

More specifically, based on a relation between numbers of dots-in-width of black bars and white bars printed on the test chart and measured values of the widths of black bars and white bars, the bar width correction means generates a correction table in which numbers of dots-in-width are correlated to the widths of black bars and white bars.

In addition, the bar width correction means has an input means that accepts an input of a barcode type and a base-bar width information, references the correction table based on the accepted barcode type and the base-bar width information, and selects the numbers of dots-in-width of black bars and white bars to be set at a printing time so that widths of all black bars and white bars of a printed barcode of the type are equal to or close to predetermined sizes of the barcode type.

The black bars may include a plurality of black bars extending in a vertical direction in parallel and a plurality of black bars extending in a horizontal direction in parallel, and the correction table and the barcode correction values may be generated separately for the vertical direction and the horizontal direction. This prevents the bar widths from being affected by satellites depending upon the direction of a barcode.

The bar width correction means estimates black bar widths and white bar widths, whose number of dots-in-width are not included in the test chart, based on the measurement result and derives the black bar widths and the white bar widths. This ability reduces the number of bar widths, included in the test patterns on the test chart, to a limited number.

According to the present invention, there is provided a computer readable recording medium for storing therein a barcode generation program that generates barcode configuration information for printing barcodes, the program causing a computer to perform the steps of: measuring widths of black bars and white bars of a barcode, using a test chart, from an image of the test chart printed on a particular printing device based on image data on the test chart, the test chart provided for printing black bars and white bars of the barcode, each bar in one of a plurality of different numbers of dots-in-width wherein a space between neighboring black bars is used as the white bar; and calculating numbers of dots-in-width of black bars and white bars to be set at a printing time, based on the measurement result, as barcode correction values so that widths of printed black bars and white bars meet predetermined sizes.

A printing device according to the present invention is a printing device capable of printing barcodes, comprising a print means that receives image data of a test chart from an external device, the test chart provided for printing black bars and white bars of a barcode, each bar in one of a plurality of different numbers of dots-in-width wherein, in the image data on the test chart, a space between two neighboring black bars on the test chart is used as the white bar and correction values are calculated from measured values of black bars and white bars of a test chart printed on the print means and, based on the correction values, barcodes are printed.

A test chart according to the present invention is a test chart created by recording a test pattern on a print medium, the test pattern constituting a test chart for correcting black bar widths and white bar widths of a barcode recorded by a printing device wherein the test pattern is created by arranging black bars each of which has one of a plurality of numbers of dots in width in increments of one dot and each of spaces between neighboring black bars has one of a plurality of numbers of dots in width in increment of one dot.

The test pattern and the test chart according to the present invention allow the widths of black bars and white bars of a barcode to be corrected according to individual user's conditions such as the printing device installation environment, characteristics, and paper types, thus making it possible to generate a barcode, which is suitable for the condition, quickly and with the minimal consumption of ink and paper.

In addition, using the space between neighboring black bars in the image data of a test chart as the white bar further reduces the consumption of ink and paper.

The still other configurations and the effects of the present invention will be described in detail below.

### BRIEF DESCRIPTION OF THE DRAWINGS

FIG. 1 is a diagram showing the general configuration of a barcode generation system in an embodiment of the present invention.
FIG. 2 is a block diagram showing an example of the control hardware configuration of an information processing device and a printing device in the system shown FIG. 1.
FIG. 3 is a diagram showing the outline of a pattern such as a barcode, configured by black bars and white spaces, recorded by a recording unit.
FIG. 4 is a schematic diagram showing how a satellite, ejected from an inkjet printing device, lands on paper over time.
FIGS. 5A and 5B are diagrams showing how satellites are generated when a barcode having bars parallel and vertical to the nozzle array is printed on an inkjet printing device.
FIG. 6 is a diagram showing an example of the configuration of a test chart used to confirm the widening and narrowing of black bars and white spaces in the embodiment of the present invention.
FIGS. 7A and 7B are graphs showing the relation between the number of dots-in-width of bars and spaces printed of a test chart and the measured values of the widths of the corresponding bars and spaces that are actually printed in the embodiment of the present invention.
FIG. 8 is a diagram showing an example of the external view of the configuration of the barcode generation system in the embodiment of the present invention.
FIG. 9 is a diagram showing an example of a measurement result table showing the relation among the number of dots-in-width, black bar width, and white space width obtained from the test chart in the embodiment of the present invention.
FIG. 10 is a diagram showing an example of a correction table in the embodiment of the present invention.
FIGS. 11A and 11B are diagrams showing an example of barcode configuration information tables in which barcode configuration information is stored as an example of barcode correction values shown in FIG. 8.
FIG. 12 is a diagram showing the operation of the barcode generation system in the embodiment of the present invention.
FIG. 13 is a flowchart showing the processing for creating the correction table in the barcode generation system in the embodiment of the present invention.
FIG. 14 is a flowchart showing the processing for generating barcode configurations for which an appropriate correction is performed in the barcode generation system in the embodiment of the present invention.

### DETAILED DESCRIPTION OF PREFERRED EMBODIMENT

A preferred embodiment of the present invention will be described in detail below with reference to the drawings. Note that the components described in the following embodiment are exemplary only and do not intend to limit the scope of the present invention thereto.

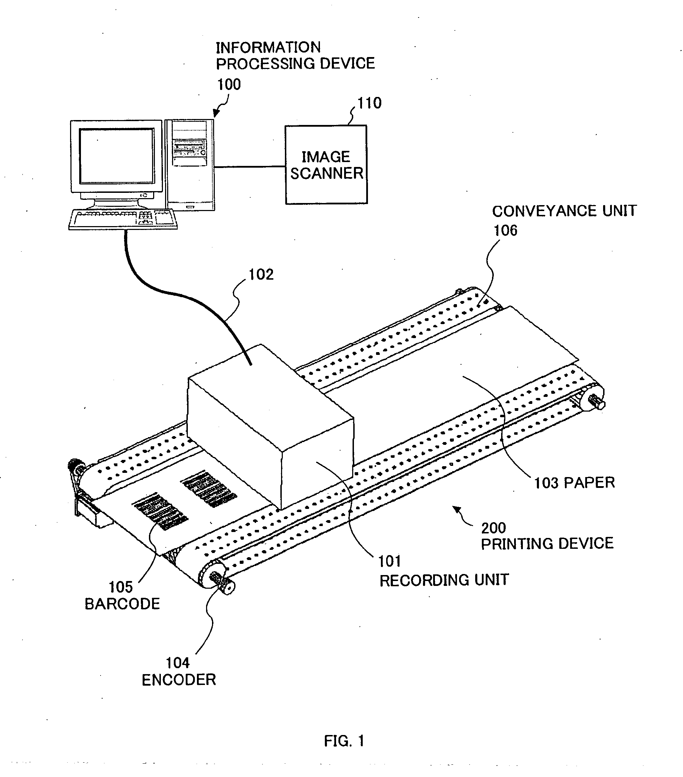

FIG. 1 is a diagram showing the general configuration of a barcode generation system in this embodiment. This system comprises an information processing device 100, an image scanner 110, and a printing device 200.

The printing device 200 in this embodiment, an inkjet printing device employing the ink ejection method that uses thermal energy, comprises a conveyance unit 106 that conveys paper 103 that is one type of print media, an encoder 104 that detects the conveyance speed of the paper 103, and a recording unit 101 that performs the inkjet recording method for recording image data. This recording unit 101 is connected to the information processing device 100 via an interface cable 102 such as a USB cable. The information processing device 100 is a device, for example, a personal computer (PC), that transfers image data and control commands such as a cleaning command, to the printing device 200. The image scanner 110 is connected to the information processing device 100 as one of its peripheral devices to optically read a test chart on which a test pattern, which will be described below, is recorded.

In response to the paper detection signal received from a paper sensor (not shown) in the conveyance unit 106 and in synchronization with the paper speed signal received from the encoder 104, the recording unit 101 ejects ink droplets on the conveyed paper 103 to record image data thereon. One-dimensional barcodes 105 are recorded in the example in FIG. 1 though any image can be recorded.

Instead of using the encoder 104, another configuration is also possible in which a conveyance device independent of the recording unit 101 is used to convey a print medium, such as a paper, at a speed specified by the user.

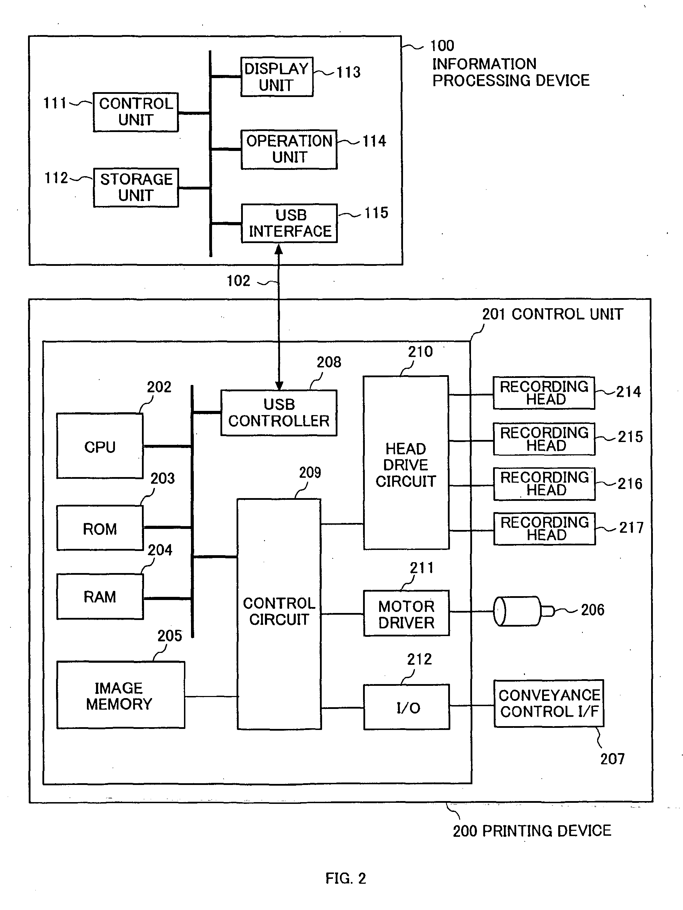

FIG. 2 is a block diagram showing an example of the control hardware configuration of the information processing device 100 and the printing device 200 in the system shown FIG. 1.

The information processing device 100 comprises a control unit 111, configured by a central processing unit (CPU), and causes this control unit 111 to execute the control program stored in a storage unit 112 for controlling the components. The storage unit 112 may include a ROM, a RAM, and an HDD. A display unit 113, which includes a display such as an LCD or CRT display, displays information on the display screen to present it to the user. An operation unit 114, which includes a keyboard and a mouse, etc., accepts an operation or information from the user. A USB interface 115 is shown as an example of the printer interface for connecting the information processing device 100 to the printing device 200. Note that the printer interface is not limited to the USB.

A control unit 201 of the printing device 200 comprises a central processing unit (CPU) 202 that executes the control program stored in a non-volatile memory (ROM) 203 for controlling the components. The control unit 201 further comprises a memory (RAM) 204, used by the CPU 202 as a work area or a reception buffer for processing various types of data, and an image memory 205 used as the image expansion unit via a control circuit 209. In addition, the CPU 202 controls the following via the control circuit 209: a head drive circuit 210 that drives recording heads 214-217; a motor driver 211 that drives a motor 206 for controlling the cleaning operation, which keeps the recording heads in the best state for recording, and the recording operation; and an input/output interface control unit (I/O) 212 of a conveyance control I/F 207 that feeds a paper under the recording head. In this example, the encoder 104 shown in FIG. 1 is assumed to be included in the conveyance control I/F 207.

The printing device 200 has a USB controller 208 that receives image data and a cleaning command, received from the information processing device 100 that is basically an external device, via the interface cable 102. The printing device 200 operates according to the various commands that are received.

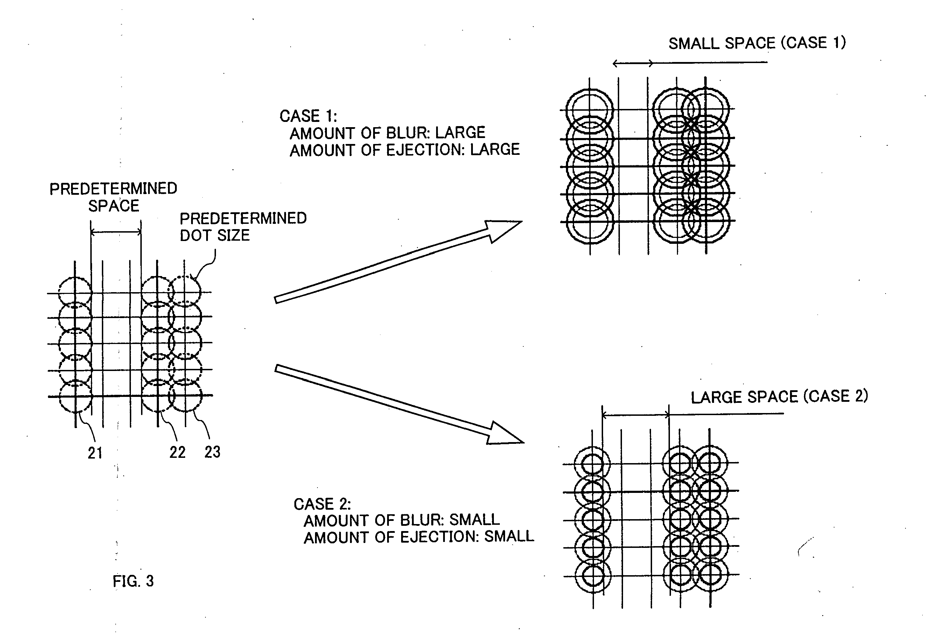

FIG. 3 is a diagram showing the outline of a pattern recorded by the recording unit 101 as a pattern such as a barcode composed of black bars and white bars. The black bar is a linear element recorded in black ink, and a white bar, also called a white space, is a linear element that is a non-recorded blank part. In this figure, the pattern is recorded in the order of lines 21, 22, and 23. In the description below, a black bar that is a recorded part of a barcode is also called simply a bar, and a white space that is a part (non-recorded part) between neighboring two black bars is also called simply a space. In the example shown in FIG. 3, the line 21 constitutes a narrow bar, and lines 22 and 23 constitute a wide bar.

Because ink in the form of liquid is ejected to form an image on an inkjet printing device, the size of a recorded dot varies according to the ink ejection amount that depends on the conditions such as the usage environment, individual recording-head characteristics, and ink types and according to the blurring rate that depends on the paper material. Normally, the ejection amount is determined based on the relation with the print medium, and the ink dot size is determined, within an assumed usage environment. However, the degree of blurring and the ejection amount change according to the recording condition and the installation environment, which become severe when a printing device is used for commercial applications, and according to the head characteristics and paper types. As a result, the printed dot size may change as shown as case 1 and case 2 in FIG. 3. A change in the dot size makes the dot-to-dot space larger or smaller than a specified value, sometimes resulting in a barcode read error or, in the worst case, a failure to read.

In addition, even if there is no blurring variation factors such as those described above, a black bar and a white space, each of which is composed of the same number of dots-in-width, are not the same size because an image is formed by blurring ink. This is the reason why the generation of a barcode on an inkjet printing device needs correction.

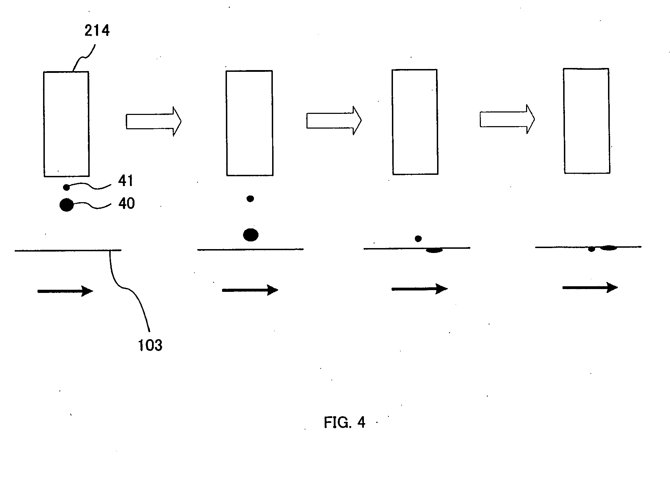

FIG. 4 is a schematic diagram showing how a satellite, ejected from an inkjet printing device, lands on a paper over time. When ink is ejected from a recording head (a recording head 214 in this example), a main droplet 40 that forms an image lands on a paper 103 and, after that, a sub droplet (also called a satellite) 41 that is a residual liquid remaining after the ejection of the main droplet 40 lands on the paper lagging behind the main droplet 40. This sub droplet 41 is smaller in size than the main droplet 40. When the paper 103 is conveyed relatively into one direction (shown by an arrow in the figure) in relation to the recording head 214, the satellite 41 is formed always behind the landing position of the main droplet 40 in the paper conveyance direction. Although a line-type recording head, which has nozzle arrays extending across the width of the paper, is assumed in this example, there is also the effect of satellites on a serial-type recording head in which the main scan is performed in the direction vertical to the conveyance direction of the paper. That is, a satellite is formed always behind the landing position of the main droplet 40 in the head scanning direction.

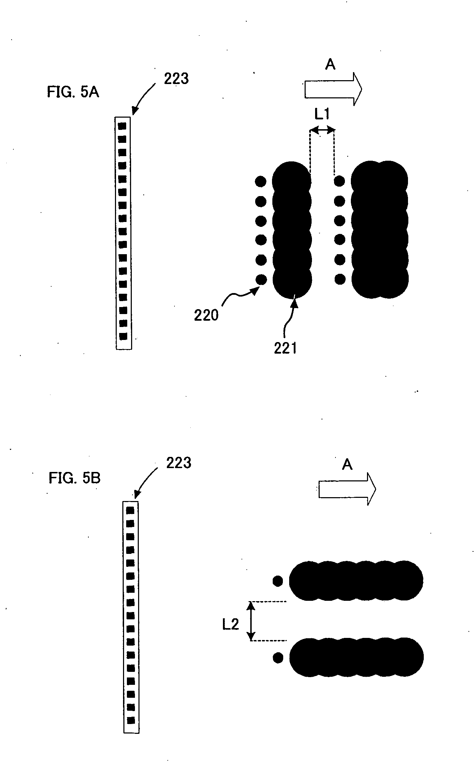

FIG. 5A is a diagram showing how satellites are generated when a barcode having bars parallel to a nozzle array 223 is printed on an inkjet printing device. This figure shows a case in which the paper is conveyed in the direction A in relation to the line-type recording head. As described above, the satellite 41 is formed in a position always behind a position, in which the main droplet 40 lands, in a paper conveyance direction. So, in the case of a barcode configured vertically to the paper conveyance direction (that is, parallel to the nozzle array), there is a possibility that a satellite dot array 220 adjacent to a main droplet dot array 221 makes the width of a black bar of the barcode, much larger than that of the white space.

FIG. 5B is a diagram showing how satellites are generated when a barcode composed of bars parallel to the paper conveyance direction (that is, vertical to the nozzle array 223) is printed on an inkjet printing device. Unlike the satellite dot array in FIG. 5A, the satellite dot array of the barcode in FIG. 5B overlap with the line of the main droplet array and, so, most of the satellites are hidden by the main dot array. In this case, the satellites are shifted from the main droplet but in the direction in which the bar width is not affected. So, even if satellites are generated, the width of the black bar does not become much larger than the width of the white space.

When a barcode is printed on an inkjet printing device on which satellites are generated, the direction of the barcode is one of factors that affect the black bar width and the white space width as described above, meaning that this factor must be taken into account in properly generating a barcode.

To address this problem, the present invention uses a test pattern that makes it possible to easily know the relation between the number of dots-in-width of a bar and a space constituting a barcode and the width of an actually recorded bar and space and to correct the barcode based on the read result, thus making it possible to record a barcode that can be reliably read even if the recording environment changes.

Next, the following describes a test chart used to determine barcode correction values and a method for correcting barcode widths in this embodiment.

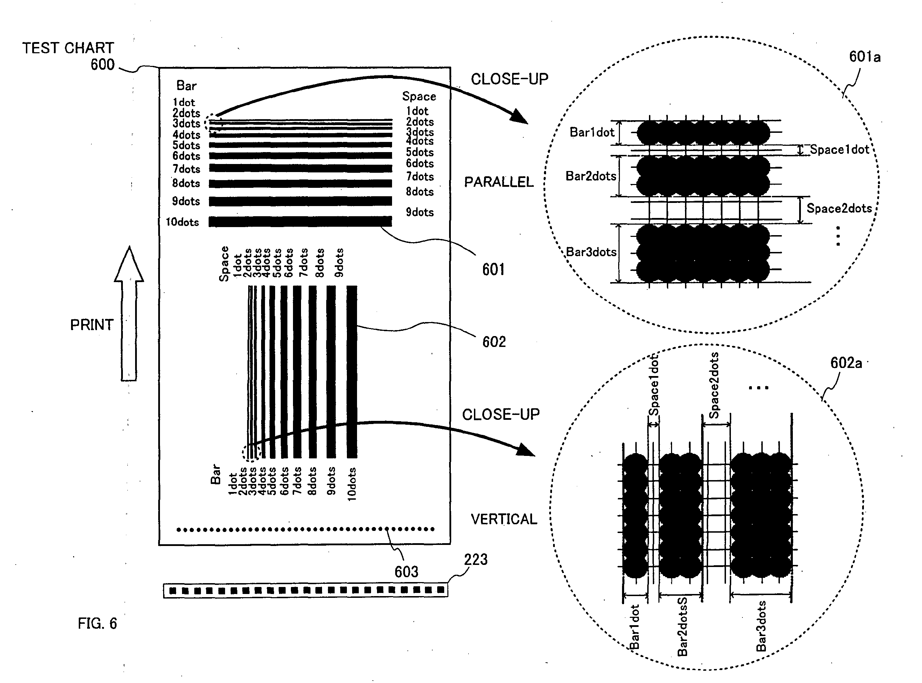

FIG. 6 is a diagram showing an example of the configuration of a test chart used to confirm the widening and narrowing of black bars and white spaces in this embodiment.

The test pattern on the test chart 600 includes the two black bar groups: a black bar group 601 composed of plural black bars each extending in the direction parallel to the nozzle array 223 and a black bar group 602 composed of plural black bars each extending in the direction vertical to the nozzle array. In the example, each black bar group is composed of bars of varying bar widths ranging from 1 dot to 10 dots. Note that the ten types of bar widths are not always required, but at least three types of black bar widths are required, for this test pattern. That is, though two types of black bar widths are required to form the black bars themselves, three or more types of black bar widths are required to form at least two types of white bars each of which is between two black bars. A dot array 603 is composed of dots each of which is an isolated one dot used to confirm the diameter of each dot. The dot array 603 is not related directly to the operation of this embodiment.

Preferably, black bars and white spaces should be measured in a wide range of dots in width, for example, 1, 2, 3, 10, and 20 dots in width, for highly accurate correction.

The test chart 600 shown in FIG. 6 is configured in such a way that the width of each bar on the surface of the test chart printed on the paper used for actual barcode printing is measured so as to be able to check the relation between the number of dots-in-width of a printed bar element and the actual bar width on the paper. That is, printing the test chart of the present invention under the actual use condition (device, environment, paper) makes it possible to know the actual bar widths considering the difference in the ejection amount dependent on the recording head characteristics and the difference in the blurring rate dependent on the paper types and to generate a barcode whose black-bar/white-space sizes are corrected according to the actual bar widths. The method for analyzing an image obtained by reading the test chart will be described below.

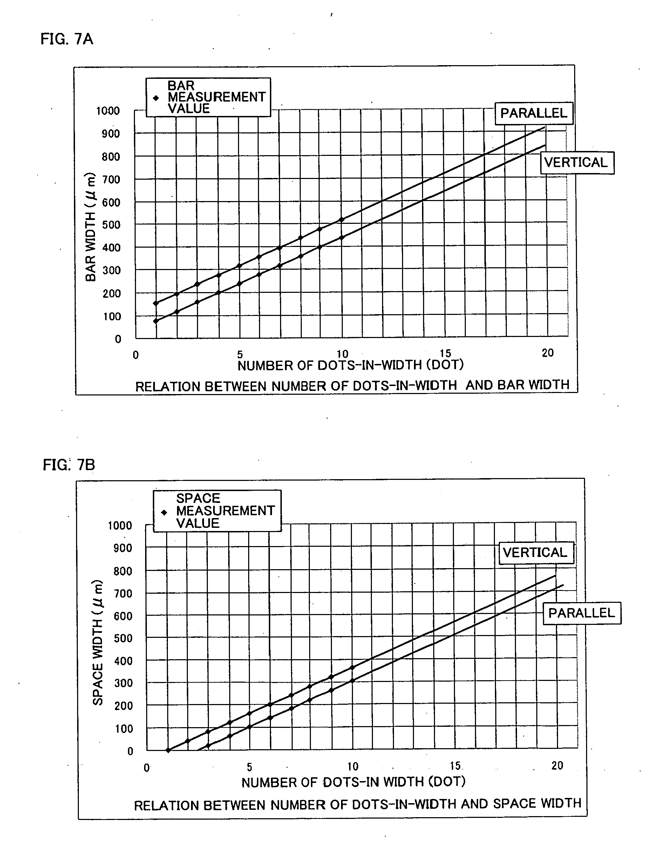

FIGS. 7A and 7B are graphs showing the relation between the numbers of dots-in-width of printed bars and spaces on the test chart and the measured values of the width of the corresponding bars and the corresponding spaces that are actually printed. Those graphs are used to estimate the relation between the number of dots-in-width, not included in the test chart, and the actual widths of corresponding bar and space from the values obtained from the test chart. The graphs show the measurement result when the bars of a barcode are "parallel" to the nozzle array and when the bars of a barcode are "vertical" to the nozzle array. Those graphs show that the actual size of a bar is larger than the actual size of a white space even when the number of dots-in-width is the same. The graphs also show that, for the directions "vertical" and "parallel", a "parallel" bar is larger than a "vertical" bar and that a "vertical" space is larger than a "parallel" space.

Using the test pattern in which the space between neighboring bars is used as a white space reduces the area, in which black bars and white spaces included in the test chart are arranged, to a minimum area in order to create the graphs. In addition, there is neither a need to create a large test chart for generating a large barcode nor is there a need to create plural pages of test chart.

Although bars ranging in size from one to ten dots are created in this embodiment, at least three types of black bars of varying sizes and two types of white spaces of varying sizes are required theoretically in the test chart for drawing the graphs given above. Of course, if the print paper has an enough printable area, more black bars and white spaces may be used to increase accuracy.

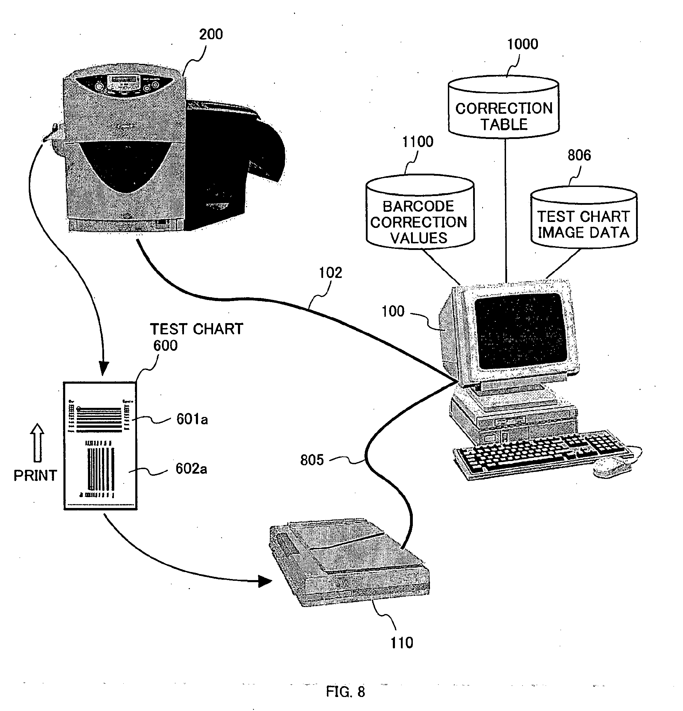

FIG. 8 is a diagram showing an example of the external view of configuration of the barcode generation system in this embodiment.

To print the test chart 600 shown in FIG. 6, test chart image data 806 stored in the storage unit 112 of the information processing device 100 and corresponding to the test pattern is transferred from the information processing device 100 to the printing device 200 via the interface cable 102. As described above, the test chart 600 recorded by the recording unit 101 of the printing device 200 (FIG. 1) gives the best effect when printed in the same condition as that of the actual use condition (printing device, recording environment, paper used, etc.). The test chart 600 recorded on the paper is set on the image scanner 110 for reading. The information processing device 100 receives the image information, which is read in this way, via an interface cable 805, and the control unit 111 (FIG. 2) obtains the actual bar width information that is the bar elements of various widths recorded on the test chart 600. In addition, the control unit 111, which works as a bar width correction unit, generates barcode correction values 1100, which will be described below, based on this actual bar information and stores the barcode correction values 1100 in the storage unit 112. The storage unit 112 also stores a correction table 1000 that will be described below.

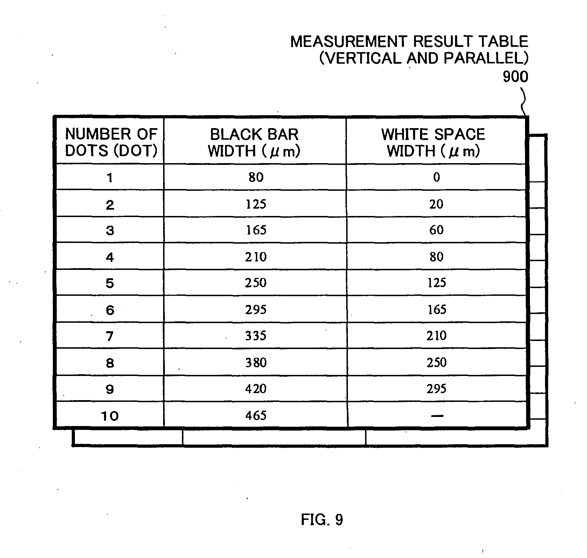

FIG. 9 is a diagram showing an example of a measurement result table 900 showing the relation among the number of dots-in-width, and the widths of black bar and white space obtained by reading and analyzing the test chart 600. The table includes the measurement results of black bars and white spaces parallel to the nozzle array and the measurement results of black bars and white spaces vertical to the nozzle array. This data indicates the result of image data obtained by reading the test chart 600 by the image scanner 110, that is, for each specified number of dots-in-width (integer), the data indicates the result obtained by measuring the actual bar width (in micrometers) of a black bar that actually lands and blurs on the paper surface and the actual bar width (in micrometers) of a white space. Therefore, the measurement result table 900 is created for each use condition that varies from case to case. More specifically, the table shows that the width of the 7-dot black bar vertical to the nozzle array direction is 335µm on the paper surface and that the width of the 7-dot white space is 210µm. Although the data shown in FIG. 9 should match the result of the graphs shown in FIGS. 7A and 7B, the compatibility is not considered in this example for convenience.

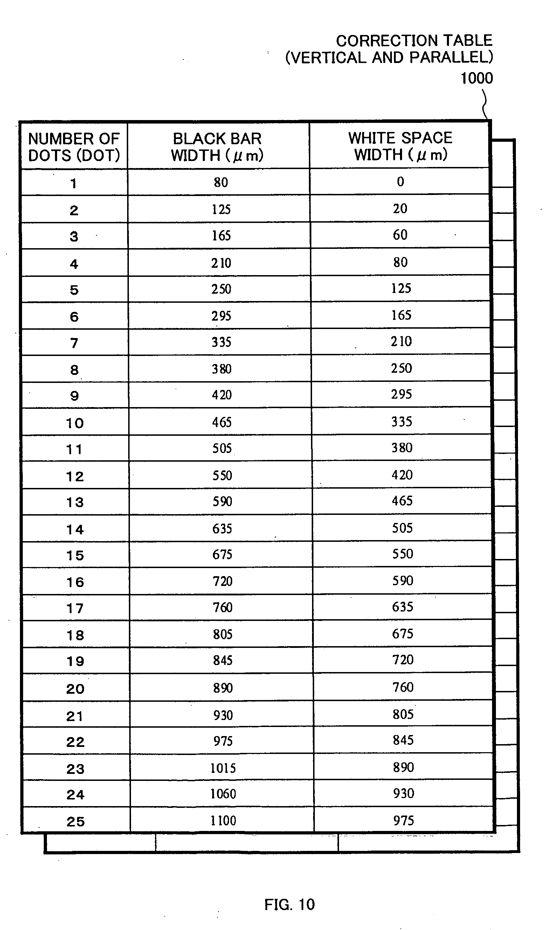

FIG. 10 is a diagram showing the correction table 1000 created by estimating from the graphs created based on the measurement results shown in FIG. 9. The table shows the relation among the number of dots-in-width, and the widths of black bars and white spaces, from one dot to 25 dots in width in increments of one dot. In this example, the values of one dot to ten dots of black bars are actually measured values and the subsequent values are values estimated based on the known data. The figure includes a table of patterns of black bars and white spaces vertical to the nozzle array and a table of patterns of black bars and white spaces parallel to the nozzle array.

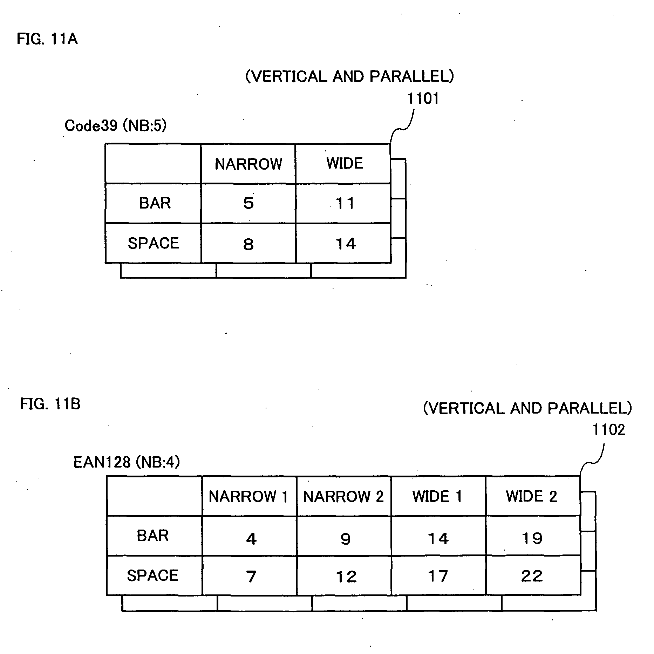

FIGS. 11A and 11B are diagrams showing barcode configuration information tables 1101 and 1102 in which barcode configuration information on different types of barcode is stored as an example of the barcode correction values 1100 shown in FIG. 8.

One-dimensional barcodes are classified roughly into two types: binary level and multi level. A binary-level barcode is a barcode configured by black bars of two width types and white spaces of two width types. The ratio in width between the two width types is 1:2. Typical barcodes of the binary level barcode includes Code39 and ITF. A multi-level barcode is a barcode configured by black bars of four width types and white spaces of four width types. The ratio in width among all width types is 1:2:3:4. Typical barcodes of the multi-level barcode include JAN, EAN128, and Code128. For example, to correct a multi-level barcode, a set of four numbers of dots-in-width of black bars are selected from the correction table 1000 shown in FIG. 10, which contains black bar widths and white space widths, so that their ratio in width among actual width sizes becomes 1:2:3:4 and, in addition, a set of four numbers of dots-in-width of white spaces are selected so that their actual size widths are equal to those of the corresponding black bars. Determining the appropriate correction values of barcodes in this way generates highly-readable, proper barcodes.

The following describes more in detail how to determine the correction values of a barcode, configured by the bars vertical to the nozzle array, of the binary-level barcode Code 39 and the multi-nevel barcode EAN128.

The barcode configuration information table 1101 shown in FIG. 11A shows the corrected dot configuration of the Code39 barcode format in both directions, vertical and parallel, when the standard narrow bar width (NB) is five dots. This corrected dot configuration is obtained as follows. The correction table 1000 shown in FIG. 10 indicates that the black bar width of the narrow bar of 5 dots is 250µm. The number of dots-in-width of the narrow space is determined to be 8 dots by searching the correction table 1000 for the number of dots-in-width corresponding to 250µm that is equal to the size of the narrow bar. As a result, the actual size of the black bar width of 5 dots becomes equal to the actual size of the white space width of 8 dots on the paper surface. Because the ratio between the narrow bar/space and the wide bar/space is 1:2, the number of dots-in-width corresponding to the width closest to 250µm × 2 = 500µm is searched for from the correction table 1000. And, the wide bar is determined to be the wide bar of 11 dots in width whose actual black bar width is 505µm that is closest to 500µm, and the wide space is determined to be the wide space of 14 dots in width whose actual white space width is 505µm that is closest to 500µm. Thus, the actual sizes on the paper surface determined in this way satisfy the condition for the standard, that is, "narrow bar × 2 = wide bar" and "black bar width = white space width", that is one of the important factors of the barcode reading rate.

The barcode configuration information table 1102 shown in FIG. 11B shows the corrected dot configuration of narrow bar (NB) width of 4 dots in the EAN128 barcode format in both directions, vertical and parallel, when the standard narrow bar width (NB) is four dots. For example, when the direction is vertical, the corrected dot configuration is obtained as follows. The correction table 1000 indicates that the actual black bar width of the narrow bar of 4 dots-in-width is 210µm. The bar widths of black bars representing four values in the ratio of 1:2:3:4 are calculated, respectively, as 210µm, 420µm, 630µm, and 840µm. Using the same method described above, the numbers of dots-in-width corresponding to the bar widths are determined as 4 dots, 9 dots, 14 dots, and 19 dots from the correction table 1000 shown in FIG. 10. Similarly, the space widths corresponding to 210µm, 420µm, 630µm, and 840µm are determined as 7 dots, 12 dots, 17 dots, and 22 dots. Thus, the actual sizes on the paper surface determined in this way satisfy the condition for the standard, that is, "ratio of 1:2:3:4" and "black bar width = white space width", that is one of the important factors of the barcode reading rate. The same is applicable to the parallel direction.

The barcode configuration information tables 1101 and 1102, as well as the barcode type information, are saved in the storage unit 112 of the information processing device 100.

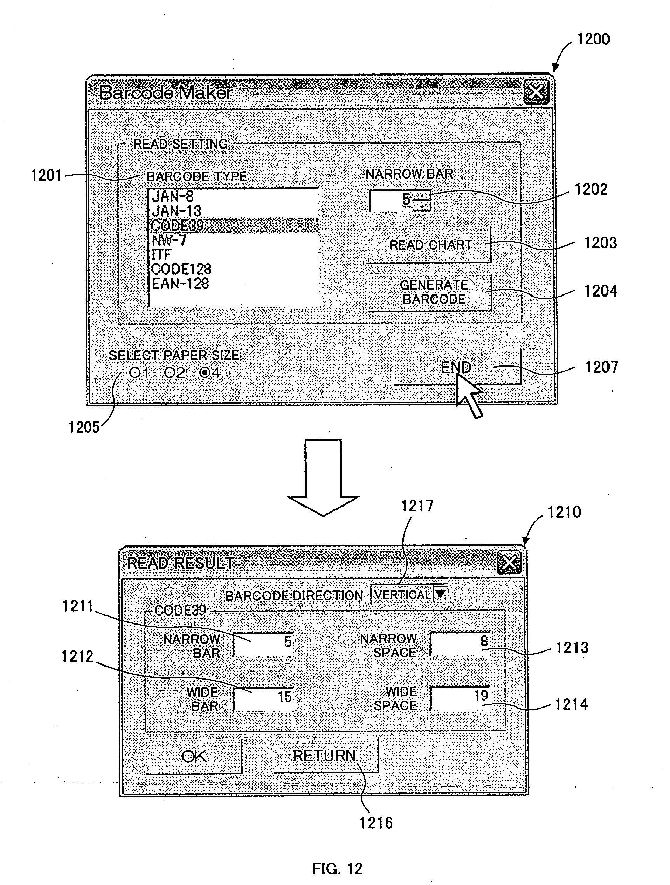

FIG. 12 is a diagram showing an example of screens used to describe the operation of the barcode generation system in this embodiment.

An input screen 1200 of the barcode generation application executed on the information processing device 100 comprises a Barcode Type Selection box 1201 in which a desired barcode type is selected from barcode options, a Number of Dots-In-Width Entry box 1202 in which the number of dots-in-width of a narrow bar, which is the base bar width information, is entered, a Read Chart button 1203 used to instruct to read the test chart 600, a Generate Barcode button 1204 used to generate at least barcode configuration information, a Select Paper Size radio button 1205 used to select the paper size, and an End button 1207 that accepts an end instruction.

When a user presses the Read Chart button 1203, the barcode generation application reads the output recorded on the test chart 600 that is set on the image scanner 110, and creates the correction table 1000 such as the one shown in FIG. 10 based on the number of dots-in-width of elements and the actual measurement values based on the image that is read. After that, the Generate Barcode button 1204 becomes operable. When the user presses the Generate Barcode button 1204, the barcode generation application calculates the best barcode correction values that match the barcode type and the number of dots-in-width of the narrow bar specified by the user on the input screen 1200 and outputs a barcode configuration information screen 1210. For a binary-level barcode, the barcode configuration information screen 1210 displays the best numbers of dots-in-width in the display boxes, Narrow Bar 1211, Narrow Space 1213, Wide Bar 1212, and Wide Space 1214, according to the result of bar direction selection. A Barcode Direction selection menu 1217 allows the user to select the barcode bar direction (vertical or parallel to nozzle array). An OK button 1215, when pressed, stores the configuration information on the barcode (best numbers of dots-in-width) in the storage unit 112 of the information processing device 100. The stored information is used for later barcode recording. It is also possible that the display boxes on the barcode configuration information screen 1210 accept corrections from the user. For example, it is possible for the user to make fine adjustment, for example, to reduce the dot width by one dot to make the barcode smaller at the sacrifice of barcode quality. In addition, instead of providing the Barcode Direction selection menu 1217, it is also possible to display both vertical direction data and parallel direction data at the same time.

When the barcode generation application does not have the barcode recording capability, the user can use the barcode configuration information screen 1210 to confirm the correction values. After the confirmation, the user can specify the bar widths and the space widths in the dot configuration input boxes (not shown) of standard barcode generation software. This results in generating the best barcodes with a higher reading rate.

For a multi-level barcode, the best numbers of dots-in-width are displayed in the bar/space display boxes, not shown, corresponding to four values on the similar screen 1210.

Similarly, when the user wants to generate barcodes parallel to the nozzle array, the corresponding correction table can be referenced to generate barcodes for generating barcodes corresponding to the desired barcode direction.

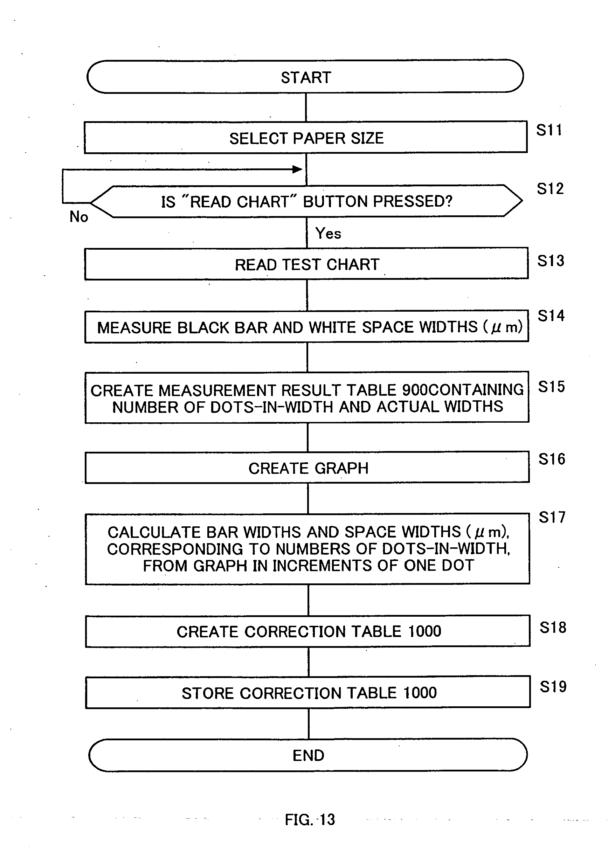

FIG. 13 is a flowchart showing the processing for creating the correction table 1000 in the barcode generation system in this embodiment. The program describing the execution procedure of the processing of this flowchart processing is stored in the storage unit 112 (FIG. 2), and the control unit 111 executes this program for implementing the processing. Another processing that will be described is executed in the same way.

Assume that, before the processing shown in FIG. 13 is started, the user has printed the test chart 600 on the printing device 200 via a predetermined operation. When the user selects the Select Paper Size radio buttons 1205 to select the paper size (S11) and presses the Read Chart button 1203 (S12) with the user-printed test chart on the image scanner 110, the barcode generation system reads the test chart 600 (S13). The system measures the widths (µm) of black bars and white spaces corresponding to the number of dots-in-width of bar elements printed on the test chart 600 based on the read image (S14) and creates the measurement result table 900 (FIG. 9) (S15). Next , the system finds the relational formula for the number of dots-in-width and the width sizes based on the measurement result table 900 and creates a graph (S16). In addition, based on the graph, the system calculates the black bar widths and the white space widths (µm) corresponding to the numbers of dots-in-width in increments of one dot (S17) and creates the correction table 1000 (FIG. 10) that associates the number of dots-in-width with the widths of bar elements (S18). For a number of dots-in-width for which an actual measured value is available, the measured value may also be used directly without using the graph. In this way, the new correction table 1000 is created to which the non-filled parts of the previously-created measurement result table 900 are added through interpolation. The created correction table 1000 is stored in the storage unit 112 (S19) for use in generating actual barcodes. After that, the Generate Barcode button 1204 (FIG. 12) is enabled.

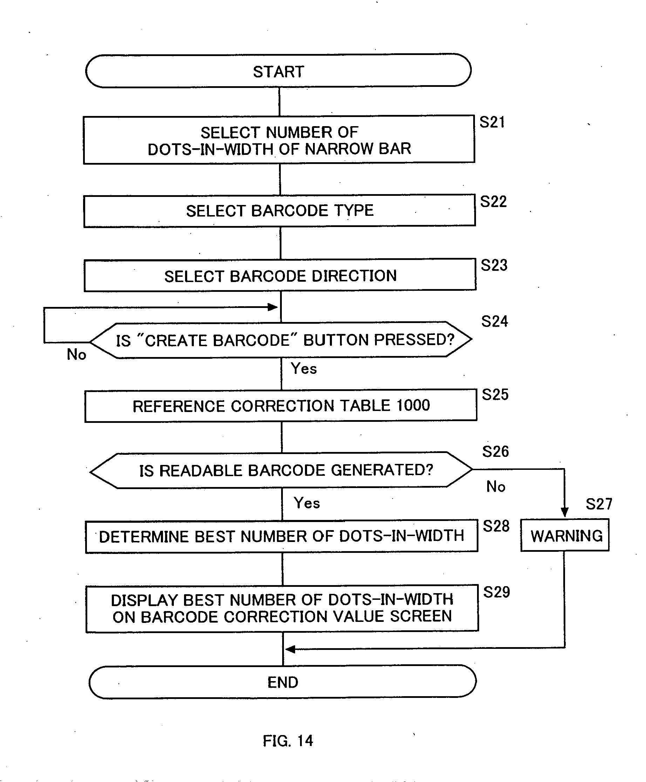

FIG. 14 is a flowchart showing the processing for generating barcode configurations for which an appropriate correction is performed in the barcode generation system.

The user selects or enters a desired number of dots-in-width of the narrow bar on the input screen 1200 shown in FIG. 12 (S21). After that, the user selects the barcode type (S22, S23).

After that, when the user presses Generate Barcode button (Yes in S24), the system references the above-described correction table 1000 containing the number of dots-in-width and the widths (S25) to determine the best numbers of dots-in-width of black bars and white spaces that match the barcode type and the directions (S28) . The determined number of dots-in-width in the direction specified by the Barcode Direction selection menu 1217 are displayed on the barcode configuration information screen 1210 (S29) shown in FIG. 12. When the directions in the Barcode Direction selection menu 1217 are switched, the display of the numbers of dots-in-width is also switched. If a readable barcode cannot be generated (No in S26), that is, if the readability of a generated barcode does not reach a predetermined level of the predetermined determination criterion, the system issues a warning to the user and terminates the processing (S27). This warning is the display of any messages such as a text, a symbol, or an image or the generation of a sound.

Although the common input screen 1200 is used for the processing in FIG. 13 and the processing in FIG. 14, separate screens each having selection boxes or buttons for the processing on the screen may also be provided.

As described above, the present invention provides a barcode generation system that can generate appropriate barcodes that satisfy the user's usage environment conditions such as the printing device installation environment, device characteristics, and paper types. The barcode generation system of the present invention can quickly find best barcode correction values and minimize the ink or paper consumption. In addition, the present invention provides the method for measuring the widening/narrowing of dots through the analysis of the test chart, thus eliminating the need for changing the test chart even if the number of barcode types or paper types increases. In addition, this method is applicable also to the width of a ruled line or a frame.

Because a non-printed part between neighboring black bars printed on the test chart is used as a white space, the conventional two types of test charts, one for black bars and another for white spaces, can be combined into one test chart. As a result, barcodes can be generated according to the user environment by reducing the work by half and without using extra ink.

While the preferred embodiment of the present invention has been described, various changes and modifications may be made to the embodiment described above.

For example, though the type of printing device having a fixed recording head that forms an image on a moving paper is described in the above embodiment, another type of printing device having a moving recording head that forms an image on a fixed paper may also be used.

Although an image scanner is used as the reading device, an optical detector specifically designed for barcodes such as a barcode reader to a barcode verifier may also be used.

Although the function to analyze the image of a test chart read by the image scanner and to determine barcode correction values is described as the function of the information processing device 100, this function may be provided on the printing device itself.

Although the printing device has four heads in the example in the above description, it may have one head or plural heads other than four.

Although the inkjet recording method is used as the recording method in the example, the present invention is applicable to any recording method in which the recorded dot size differs according to the use condition.

The Select Paper Size radio button 1205 is not necessary when only one type of paper size is used.

The positions, sizes, configurations, and numeric values of the buttons, menus, and input boxes on the display screen are exemplary only and the present invention is not limited to them.

The color of the black bar corresponds to the color of the recording ink, and the color of the white bar corresponds to the color of the paper on which barcodes are recorded. So, the color of bar elements may change according to the color of ink and paper that are used.

## Claims

1. A barcode generation system that generates barcode configuration information for printing barcodes, comprising:
a storage means that stores image data of a test chart for printing black bars and white bars of a barcode, each bar in one of plurality of different numbers of dots-in-width;
a measurement means that measures widths of black bars and white bars of the barcode based on an image of the test chart printed by a particular printing device based on the image data on the test chart; and
a bar width correction means that calculates numbers of dots-in-width of black bars and white bars to be set at a printing time, based on a measurement result of said measurement means, as barcode correction values so that widths of printed black bars and white bars meet predetermined sizes, wherein
in the image data on the test chart, a space between neighboring black bars on the test chart is used as the white bar.

2. The barcode generation system according to claim 1, wherein the test chart is printed in a condition similar to an actual use condition.

3. The barcode generation system according to claim 1, wherein based on a relation between numbers of dots-in-width of black bars and white bars printed on the test chart and measured values of the widths of black bars and white bars, said bar width correction means generates a correction table in which numbers of dots-in-width are correlated to the widths of black bars and white bars.

4. The barcode generation system according to claim 3 wherein said bar width correction means has an input means that accepts an input of a barcode type and a base-bar width information, references the correction table based on the accepted barcode type and the base-bar width information, and selects the numbers of dots-in-width of black bars and white bars to be set at a printing time so that widths of all black bars and white bars of a printed barcode of the type are equal to or close to predetermined sizes of the barcode type.

5. The barcode generation system according to claim 1, wherein said printing device is a printing device using an inkjet recording method.

6. The barcode generation system according to claim 1, wherein the black bars include a plurality of black bars extending in a vertical direction in parallel and a plurality of black bars extending in a horizontal direction in parallel and the correction table and the barcode correction values are generated separately for the vertical direction and the horizontal direction.

7. The barcode generation system according to any one of claims 1-6, wherein said bar width correction means estimates the widths of black bars and white bars, whose numbers of dots-in-width are not included in the test chart, based on the measurement result.

8. A computer readable recording medium for storing therein a barcode generation program that generates barcode configuration information for printing barcodes, said program causing a computer to perform the steps of:
measuring widths of black bars and white bars of a barcode, using a test chart, from an image of the test chart printed on a particular printing device based on image data on the test chart, said test chart provided for printing black bars and white bars of the barcode, each bar in one of a plurality of different numbers of dots-in-width, wherein a space between neighboring black bars is used as the white bar; and
calculating numbers of dots-in-width of black bars and white bars to be set at a printing time, based on the measurement result, as barcode correction values so that widths of printed black bars and white bars meet predetermined sizes.

9. The computer readable recording medium according to claim 8, said program further causing the computer to perform a step of generating a correction table in which, based on a relation between numbers of dots-in-width of black bars and white bars printed on the test chart and measured values of the widths of black bars and white bars, numbers of dots-in-width are correlated to the widths of black bars and white bars.

10. The computer readable recording medium according to claim 8 or 9, said program further causing the computer to perform the steps of:
accepting an input of a barcode type and a base-bar width information; and
selecting the numbers of dots-in-width of black bars and white bars to be set at a printing time by referencing the correction table based on the accepted barcode type and the base-bar width information so that widths of all black bars and white bars of a printed barcode of the type are equal to or close to predetermined sizes of the barcode type.

11. A printing device capable of printing barcodes, comprising:
a print means that receives image data of a test chart from an external device, said test chart provided for printing black bars and white bars of a barcode each bar in one of a plurality of different numbers of dots-in-width, wherein
in the image data on the test chart, a space between two neighboring black bars on the test chart is used as the white bar, and wherein
correction values are calculated from measured values of widths of black bars and white bars of a test chart printed on said print means and, based on the correction values, barcodes are printed.

12. A test chart created by recording a test pattern on a print medium, said test pattern constituting a test chart for correcting black bar widths and white bar widths of a barcode recorded by a printing device, wherein the test pattern is created by arranging black bars each of which has one of a plurality of numbers of dots in width in increments of one dot and each of spaces between neighboring black bars has one of a plurality of numbers of dots in width in increment of one dot.

13. The test chart according to claim 12, wherein the black bars include a plurality of black bars extending in a vertical direction in parallel and a plurality of black bars extending in a horizontal direction in parallel.
